# EUROPEAN PATENT APPLICATION

(11) **EP 1 150 208 A2**
(43) Date of publication of application: **31.10.2001**
(21) Application number: 01000128.7
(22) Date of filing: 26.04.2001
(51) Int. Cl.: G06F 9/46

(54) **Multiprocessor object control**

(30) Priority: 26.04.2000 US 199754 P; 26.04.2000 US 199753 P; 26.04.2000 US 199755 P; 26.04.2000 US 199917 P
(71) Applicant: Texas Instruments Incorporated, Dallas, Texas 75251 (US)
(72) Inventor: Killian, Robert T., Texas 75248, Dallas (US); Narayan, Ajai, Plano, Texas 75025 (US); Milovanovic, Rajko, Texas 75093, Plano (US); Overturf, James M., Murphy, Texas 75094 (US); Patton, Schuyler T., Texas 75006, Carrollton (US); Thrift, Philip R., Texas 75251, Dallas (US)
(74) Representative: Holt, Michael

(57) **Abstract**

A client-server system having server task scheduling in two phases with client deadlines phase information used in a second phase subtask server scheduling. Also, a object broker for the system with collapsing of client request calls and returns to maintain data in coprocessors, and server memory management for multitasking and data flow through a shared memory for multiple coprocessors to avoid primary processor bus congestion.

## Description

### FIELD OF THE INVENTION

The present invention relates to electronic devices, and, more particularly, to multiprocessor and digital signal processor distributed objects and methods.

### BACKGROUND OF THE INVENTION

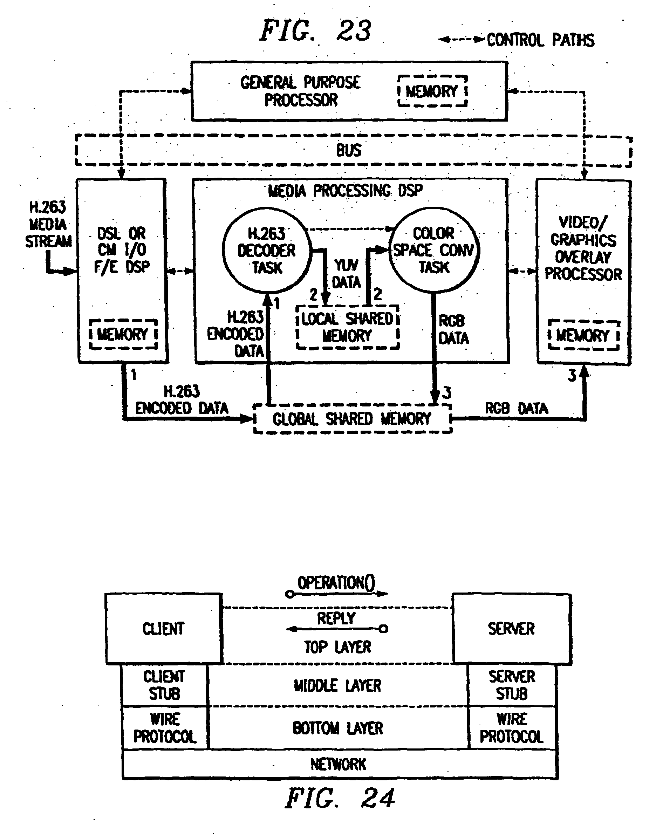

The growth of the Internet coupled with high-speed network access has thrust distributed computing into the mainstream. The common object request broker architecture (CORBA) and the distributed component object model (DCOM) standards have arisen to simplify object-oriented network programming and the component software approach. Thus a client application can call on a remote server object to provide data or functionality and thereby simplify application programming; Figure 24 illustrates generic remote procedure call architecture. In effect, object-oriented programming encapsulates details and thereby presents only object interfaces for query or interaction with other objects to allow for such distributed computing.

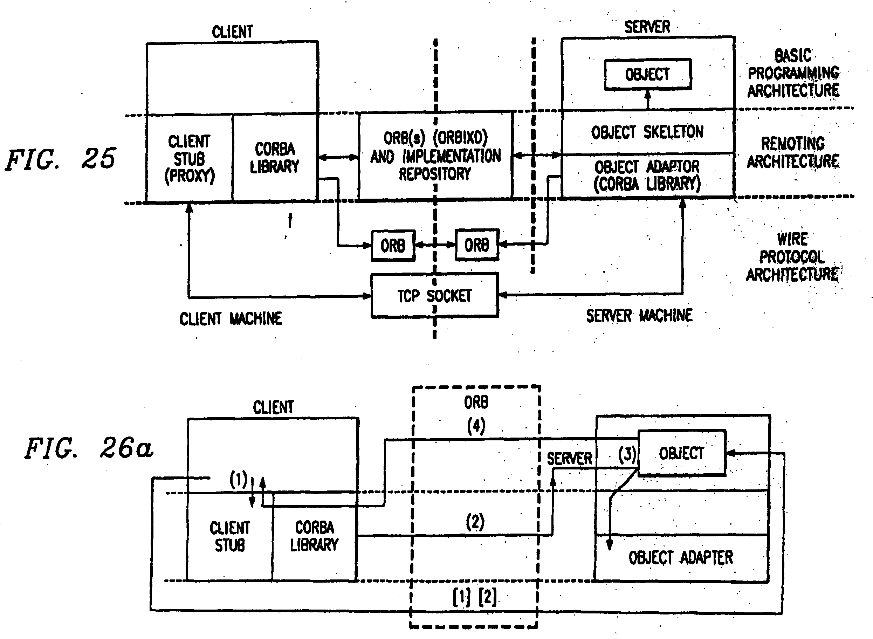

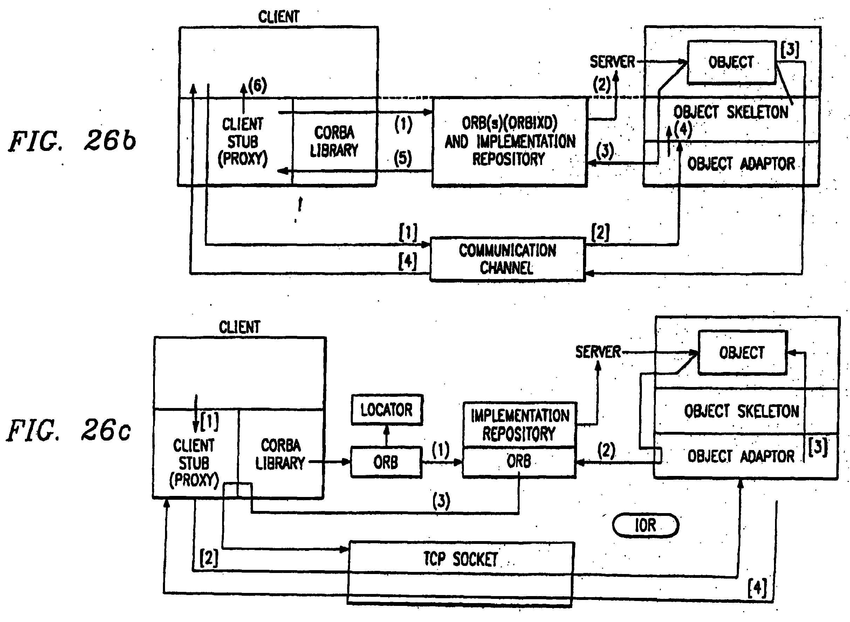

CORBA's core is the object request broker (ORB) which provides the "bus" for interaction among objects, both local and remote. A CORBA object is a set of methods plus an interface. The client of a CORBA object uses the object's reference as a handle for method calls as though the object were located in the client's address space. The ORB is responsible for finding an object's implementation (on a possibly remote server), preparing the object to receive a call request from a client application, transporting the request (e.g., parameters) from the client to the object, and returning any reply back from the object to the client. The object implementation interacts with the ORB by either an ORB interface or an object adapter (OA). Figure 25 shows the overall CORBA architecture.

An interface definition language (IDL) defines the interface of an object that will include methods to be invoked by clients while hiding details (data, implementation) as usual in object oriented programming. The IDL typically provides for data encapsulation, polymorphism, and inheritance. As Figure 24 illustrates, the client invokes an object's function by first making a call to the client stub (proxy); the stub marshals the call parameters into a message; the wire protocol sends the message to the server stub (skeleton); the server stub unmarshals the call parameters from the message and calls the object's function. The top layer in Figure 25 is the basic programming architecture, the middle layer is the remoting architecture, and the bottom layer is the wire protocol architecture. Developers of the client programs and the server object programs work with the basic programming architecture, and the remoting architecture makes the interface pointers, object references and handles meaningful among the client and server processes. The wire protocol effectively extends the remoting architecture to among various hardware devices.

As described in Cheung et al, DCOM and CORBA Side by Side, Step by Step, and Layer by Layer, a simple application to use a remote object with CORBA-enabled client and server processors could be created with five files: (1) an IDL file to define the interface(s) for an object. The IDL compiler would generate the client stub and object skeleton code plus an interface header file that is used by both the client and the server. (2) An implementation header file to derive the server implementation class for the object from the interface(s). Essentially, the implementation class is associated (by inheritance) with the interface class created by the IDL compiler. (3) An implementation of the methods of the server class. (4) A main program for the server; this program would instantiate an instance (object) of the server class. And (5) the client application which will invoke methods of the object by calls to the client stub.

For static object invocation, after compilation but before execution, CORBA registers the association between the interface name and the path name of the server executable in the implementation repository (see Figure 25). For dynamic object invocation, the IDL compiler also generates type information for each method in an interface and stores it in the interface repository. A client can query the interface repository to get runtime information about a particular interface and then use that to create and invoke a method on the object dynamically through the dynamic invocation interface. Similarly, on the server side, the dynamic skeleton interface allows a client to invoke an operation on an object that has no compile-time knowledge of the type of the object that it is implementing.

Figure 26a shows the CORBA top layer (basic programming architecture) activities of a client request of an object and invocation its methods, and the server creation of an object instance and its availability to the client. In particular, object activation follows (1) client calls client stub's static function for the object interface. (2) ORB starts the server which contains an object supporting the object interface. (3) Server program instantiates an object and registers an object reference. (4) ORB returns an object reference to the client application. Then for object method invocation [1], [2] client calls methods of the object interface which eventually invokes the methods in the server. If the methods returned values, then the server sends these back to the client.

Figure 26b illustrates the CORBA middle layer (remoting architecture) with object activation (1) upon receipt of call, client stub delegates task to ORB. (2) ORB consults implementation repository to map call to its server path name, and activates the server program. (3) Server instantiates object and also creates unique reference ID to obtain object reference. It registers object reference with ORB. (4) The constructor for the server class also creates an instance of the skeleton class. (5) ORB sends object reference tack to the client and also creates an instance of the client stub class and registers it in the client stub object table with the corresponding object reference. (6) The client stub returns to the client an object reference. Then the client invocation of object methods proceeds by [1] upon receipt of the client call the client stub creates a request pseudo object, marshals the parameters of the call into the pseudo object, calls to put the pseudo object into a message in the channel to the server, and waits for a reply. [2] When the message arrives at the server, the ORB finds the target skeleton, rebuilds the request pseudo object, and forwards it to the skeleton. [3] The skeleton unmarshals the parameters from the request pseudo object, invokes the method of the server object, marshals the return values (if any), and returns from the skeleton method. The ORB builds a reply message and places it in the transmit buffer. [4] When the reply arrives at the client side, the ORB call returns after reading the reply message from the receive buffer. The client stub then unmarshals the return values and returns them to the client to complete the call.

As illustrated in Figure 26c the bottom layer (wire protocol architecture) for object activation includes (1) upon receipt of the request, the client side ORB chooses a machine that supports the object and sends a request to the server side ORB via TCP/IP. (2) When the server is started by the server side ORB, an object is instantiated by the server, the ORB constructor is called, and the create function is invoked. Inside the create function creates a socket endpoint, the object is assigned an object identity, an object reference is created that contains the interface and the implementation names, the reference identity, and the endpoint address. The object reference is registered with the ORB. (3) When the object reference is returned to the client side, the client stub extracts the endpoint address and establishes a socket connection to the server. Then method invocation proceeds as [1] upon receipt of the call, the client stub marshals the parameters in the common data representation (CDR) format. [2] The request is sent to the target server through the established socket connection. [3] The target skeleton is identified by either the reference identity or interface instance identifier. And [4] after invoking the actual method on the server object, the skeleton marshals the return values in the CDR format.

Real-time extensions of CORBA typically provide quality of service (QoS) aspects such as predictable performance, secure operations, and resource allocation. For example, Gill et al, Applying Adaptive Middleware to Manage End-to-End QoS for Next-generation Distributed Applications.

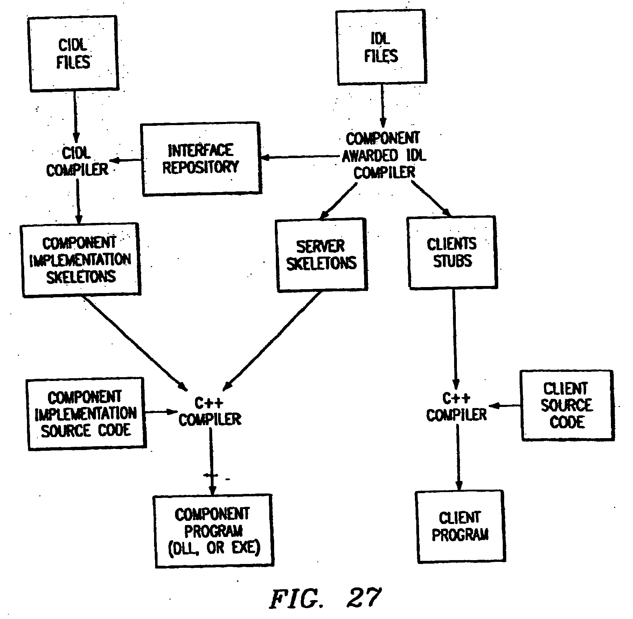

CORBA components as meta-types have been introduced, and associated component implementation definition language (CIDL) is available to describe implementations. Figure 27 illustrates the programming steps.

DCOM similarly has three layers and somewhat analogous architecture to CORBA.

Notenboom USP 5,748,468 and Equator Technologies PCT published application WO 99/12097 each describes methods of allocating processor resources to multiple tasks. Notenboom considers a host processor plus coprocessor with tasks allocated coprocessor resources according to a priority system. Equator Technologies schedules processor resources according to task time consumption with each task presenting at least one service level (processor resource consumption rate) supported, and the resource manager admits a task if sufficient resources for a supported service level exist.

Systems with two or more processors, each processor with its own operating system or BIOS, include systems with widely separated processors connected via the Internet and also systems with two or more processors integrated on the same semiconductor die, such as a RISC CPU plus one or more DSPs.

The XDAIS standard prescribes interfaces for algorithms that run on DSPs; this provides reusable objects. XDAIS requires an algorithm implement the standard interface IALG plus an extension for running the algorithm. XDAIS also requires compliance with certain flexibility rules such as relocatable code and naming conventions. A client application can manage an instance of the algorithm by calling into a table of function pointers. With the XDAIS standard/guidelines the algorithm developer is able to develop or convert an algorithm so that it is easier to plug into a DSP application framework such as the iDSP Media Platform DSP Framework.

The need for a quality of service (QoS) manager within a network node (client/server) stems specifically from real-time service requirements of all streaming-media based applications. Streaming media applications have to deal with heterogeneous codecs (encoders/decoders) and filters with unique rendering deadlines. These applications should also be able to exploit and translate human perceptual characteristics to graceful degradations in the quality of service. They should be able to handle reasonable amounts of jitter in their processing and rendering cycles. For instance, in video applications, the frame rate for rendering has to be maintained at 30 frames/sec (fps), which translates to a frame period of 33ms. The application, however, should be capable of withstanding limited instantaneous variations as negotiated with the server. Also, at 30 fps, human visual perception can withstand frame drops of about 6 frames/sec. The client application should again be capable of supporting a graceful degradation in performance (instantaneous dropping of frames) and maintain a steady-state of rendering within specific tolerances negotiated with the server. A QoS manager is the mechanism that provides the necessary functions and capabilities to realize such a real-time system.

As broadband communications such as DSL and cable modem proliferate into new markets and deliver unprecedented volumes of data to consumer devices for processing and consumption, more efficient data handling, routing, and processing techniques will be needed to keep up.

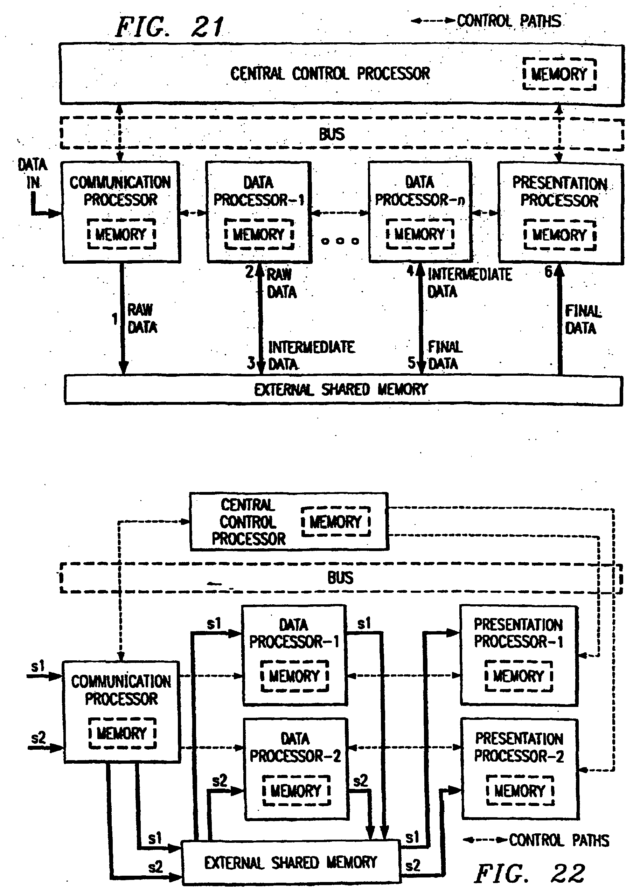

Figure 20 shows a diagram of how data flows through the processing elements of current heterogeneous systems. Each data transaction is numbered to show time ordering. For each transaction data must pass through the system bus under control of the Central Control Processor (CCP). The CCP initiates transactions by sending messages or triggers via the control paths to the various processing elements in the system.

Processing elements in Figure 20 are shown as separate processors (e.g. DSPs, ASICs, GPPs, etc.) capable of running a defined set of tasks. That is why each is shown with its own memory. Processing elements can also be individual tasks running on the same processor.

In some cases, the same data must pass through the system bus multiple times (e.g. transactions 1 and 2, 3 and 4, and 5 and 6). In such systems data must pass through the system bus a total of 2 + (2 x n) times, or in this case 6 times. Each pass through the system bus and intervention by the CCP introduces data flow overhead and reduces overall system throughput.

Data flow overhead negatively impacts how much data can move through the system in a given time frame and thereby restricts the amount of data the system is capable of processing. Such a system would likely be performing fewer useful tasks than the sum of capabilities of its elements might otherwise indicate.

### SUMMARY OF THE INVENTION

The present invention provides a client-server system with one or more features including a two-phase scheduling of server tasks, an object request broker for a client-server system with chaining of tasks on server DSPs, multitask processor internal memory management by partition internal memory into processor overhead plus a task workspace belonging to a single executing task at a time, data flow in a heterogeneous system which includes a central control processor plus bus-connected processing elements plus a shared memory for the processing elements to avoid the central control processor bus.

### BRIEF DESCRIPTION OF THE DRAWINGS

The present invention will now be further described, by way of example, with reference to the preferred and exemplary embodiments illustrated in the accompanying drawings in which:
Figure 1 shows a preferred embodiment DSPORB architecture;
Figure 2 illustrates IDL compilation;
Figures 3-13 are timing diagrams for QoS;
Figures 14-19 show preferred embodiment memory analysis;
Figure 20 shows known data flow in a heterogeneous system;
Figures 21-23 show preferred embodiment data flows; and
Figures 24-27 illustrate CORBA.

### DESCRIPTION OF THE PREFERRED EMBODIMENTS

### 1. Overview

The preferred embodiment systems typically have a host processor running a client application plus one or more server processors running server algorithms and include object request brokers for algorithm objects, quality of service control for the object request broker, memory paging for the algorithm objects, and data flow for the algorithm objects. A preferred embodiment termed iDSPOrb applies to a system with a primary processor and one or more DSP coprocessors.

iDSPOrb is a high-performance DSP Object Request Broker (DSPORB) that supports creation of and access to DSP objects from a General Purpose Processor (GPP) or another DSP in a multiprocessor environment. iDSPOrb has a general architecture and operation analogous to CORBA. iDSPOrb has the following DSPORB features:
(1) iDSPOrb supports object binding and invocation (DSP object procedure call) across processor boundaries.
(2) iDSPOrb provides a GPP-side proxy interface consisting of both compile-time headers and stubs for static invocation and a run-time dynamic invocation interface .
(3) iDSPOrb provides a DSP-side algorithm interface (stubs and headers) for building an iDSP server.
(4) iDSPOrb provides both synchronous and asynchronous invocation.
(5) iDSPOrb provides guaranteed real-time QoS.
(6) iDSPOrb provides for both frame-based and stream-based processing.
(7) iDSPOrb provides for object chaining data flow (intermediate results stay in DSP memory).
(8) iDSPOrb is implemented on a high-bandwidth multichannel GPP/DSP I/O interface.

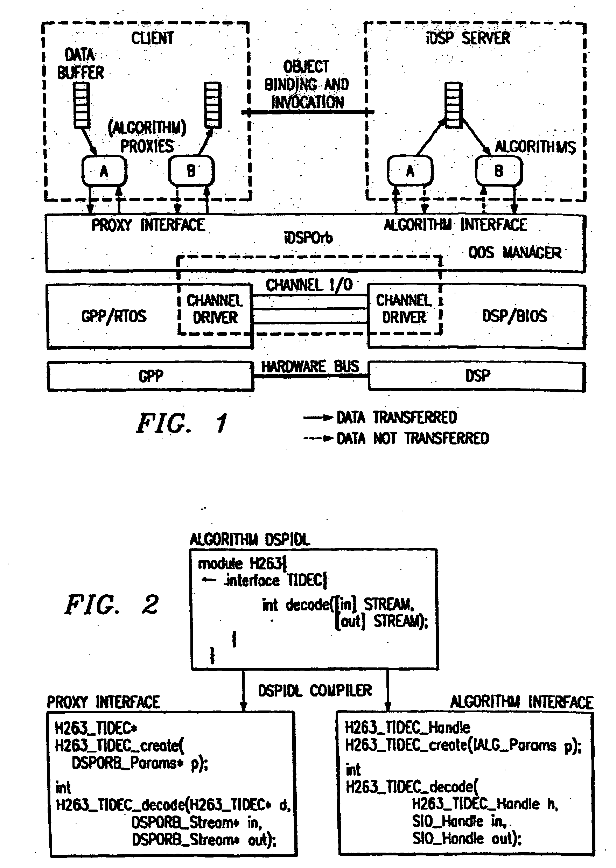

   Figure 1 shows the iDSPOrb Architecture for a GPP/ DSP dual-processor configuration, where the GPP acts as the "client" and the DSP as the "server".

The Quality of Service (QoS) manager in the iDSP system, hereby referred to as iDSP-QoSM, is a mechanism (within a server) to provide negotiated levels of service to client applications. It provides for a guaranteed quality-of-service with a pre-determined degradation policy that is communicated to the clients. The iDSP-QoSM has the following characteristics: (1) It is defined within the limited context of a node residing on a network (intra-nodal). It assumes the presence of a suitable QoS manager to control inter-nodal (network) communications. (2) It is defined for multi-processor environments with load-sharing capabilities.

The functions performed by the preferred embodiment iDSP-QoSM include the following: (1) Monitor the steady-state processing load on the servers in the system. (2) Distribute load from an overloaded server to its peers. (3) Negotiate service requirements with the client application for registering any additional load onto the servers. (4) Predict future load on the servers based on specific characteristics of individual objects being serviced by the servers. (5) Algorithm run time prediction will be based on cycles of processor time instead of time to process: This way the algorithm run time prediction is not tied to the processor operating frequency.

In Texas Instruments TMS320C62XX DSPs there is a limited amount of internal (on-chip) data memory. With the exception of the TMS320C6211 (and its derivatives), the TMS320C62XX DSPs do not have a Data Cache to make external memory (Off-chip) accesses efficient. Internal memory is at the highest level in the Data memory hierarchy of a TMS320C62XX DSP. Therefore all algorithms that run on a TMS320C62XX DSP want to use internal memory for their data workspace because that is the highest level of efficiency for accessing data memory.

Typically, algorithms for DSPs are developed assuming that they own the entire DSP processor, hence all the internal memory of the DSP. This makes integrating several different algorithms, be they the same (Homogeneous) or different (Heterogeneous), extremely difficult. A set of rules is required for the algorithm developer concerning a common method of accessing and using system resources such as internal memory.

The preferred embodiments provide a method to increase Processor Utilization when running multiple Algorithms on Data Cache-less DSPs by using a Data Paging Architecture for DSP internal memory. Developing or converting DSP Algorithms to be compliant to with a Data Paging architecture can be accomplished with Texas Instruments XDAIS standard. This standard requires the Algorithm developer to define at least one or more memory regions that will support all the data memory for the algorithm. Among these user defined regions one or all are selected to run in internal memory of a TMS320C62X DSP by the Algorithm developer. Within the DSP system software portion of the application the internal memory is divided into system support and a data workspace (page). All the algorithms within the DSP application share the workspace and own the entire workspace at execution time. On a context switch between two algorithms the DSP system software will handle respectively the transfer between the workspace and the external shadow memory of each algorithm. The preferred embodiments provide:
(1) Sharing internal data memory in data cache-less DSP between two or more DSP algorithms increases processor utilization.
(2) Running multiple algorithms from the same shared internal memory allows each algorithm to enjoy the maximum efficiency in the TMS320C62X DSP environment when accessing data memory to support stack requirements and algorithm internal variables.
(3) This architecture would function on any single processor with internal memory and a DMA utility that has access to the internal memory of the processor.
(4) Performing Context switches only at data input frame boundaries provides the best efficiency of the data paging architecture.
   Supports asymmetric page transfers of algorithm data that is read only.

The data flow in an application may be from algorithm to algorithm, and the preferred embodiments provide for the data to remain in one or more DSPs rather than being bussed to an from a GPP for each algorithm execution.

### 2. DSP ORB in dual-processor configuration

Figure 1 shows a preferred embodiment ORB (the "iDSPOrb") Architecture for a dual-processor configuration including a general purpose processor (GPP) and a digital signal processor (DSP), where the GPP acts as the "client" and the DSP as the "server". Note that the iDSPOrb includes a quality of service (QoS) manager. Figure 1 shows a client application invoking two DSP algorithm objects "A" and "B". iDSPOrb first provides object binding of proxy (client stub) objects "a" and "b" on the GPP. For example, "A" and "B" could be extensions of the DSPIDL interface for a decoder (DEC) as follows: 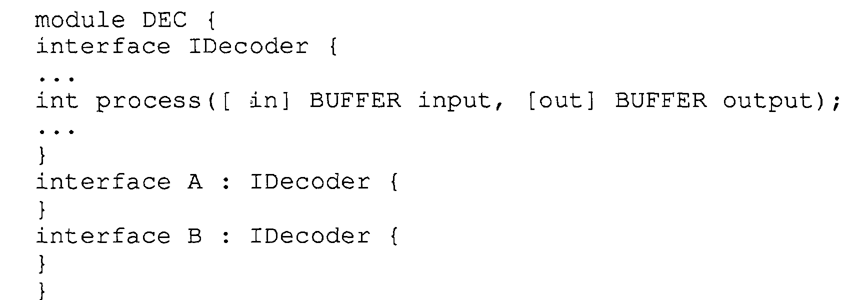 A DSP-side application (called the iDSP server) is built using the algorithm interface provided by the DSPIDL compiler:
DEC_A_Handle DEC_A_create( IALG_Params* p);
int DEC_A_decode( BUF_Handle in, BUF_Handle out);
A GPP-side application is built using the proxy interface also provided by the DSPIDL compiler:
DEC_A* DEC_A_create( DSPORB_Params* p);
int DEC_A_decode( DSPORB_Buffer* in, DSPORB_Buffer* out);
or using the iDSPOrb dynamic invocation interface. At runtime, "a" can be called from the GPP-side client application to process a buffer. This data is passed to the actual object "A" on the DSP-side. Using object chaining data flow, the output of "A" can be connected to the input of "B", so that the intermediate data buffer is not transferred back to the GPP. "b" invokes "B" which results in another processing step returning the data to the GPP. The iDSPOrb's dynamic invocation interface supports both synchronous and asynchronous invocation.

iDSPOrb does not have to be partitioned between a GPP and a single DSP. It can also run in configurations with multiple DSPs. In this case the QoS Manager (server side) performs load-balancing of DSP algorithms among the available DSPs. Other configurations can consist of an ASIC (acting as a fixed-function DSP), or ASIC plus RISC, where the algorithm interfaces are provided to client applications.

### 2a. DSPIDL compiler

iDSPOrb supports DSPIDL, an IDL (Interface Definition Language), which has the following keywords:
module : a collection of interface specifications.
For example, the H263 module could contain Decoder and Encoder interfaces.
- interface:: an interface specification.
- in:: denotes an input argument
- out:: denotes an output argument
- BUFFER:: denotes a buffer type
- STREAM:: denotes a stream type
- RESULT:: denotes the return type of a function
others for memory utilization, real time
The general form of a DSPIDL file is 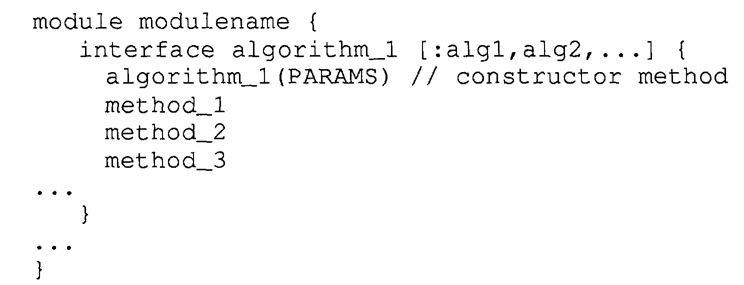 where method is
RESULT function([ direction] TYPE,...)
and direction is in , out , or [in, out] and TYPE is BUFFER or STREAM . For example, an H263 IDL might produce the algorithm and proxy interfaces as shown in Figure 2.

### 2b. Frame and stream processing

Frame versus stream processing has the following differences.
Keywords:
BUFFER: Functions with BUFFER as argument types process on a frame by frame basis.
STREAM: Functions with STREAM as argument types process a stream of frames, typically by spawning a task.
The function calls 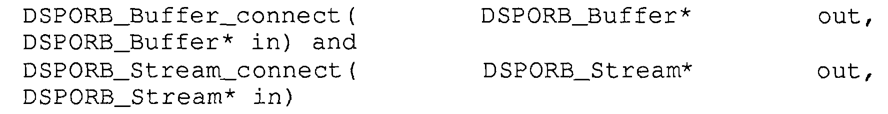 provide for connecting object outputs to inputs (frames or streams respectively). For buffers, the connect operator will cause DSPORB to create a memory buffer on the DSP where the output of one method invocation is stored for the input of another method invocation (object chaining). For example:
DSPORB_Buffer_connect( yuvframe_out, yuvframe_in);
H263_TIDEC_decode( h263frame_in, yuvframe_out);
YUV_TI_toRGB( yuvframe_ in, rgbframe_out);
For stream processing, a proxy invocation such as
H263_TIDEC_decodeStream( in_stream, out_stream);
will typically result in a task being created on the DSP side to handle the two streams SIO streams (the implementation of
H263_TIDEC_decodeStream will spawn a task to do this). Streams that as not connected provide I/ O between the client proxy and server.

### 2c. Real-time QoS manager

iDSPOrb can provide hard real-time QoS by allocating resources needed to perform a given operation within a set time constraint through the DSPORB_System_ setTimeConstraint() and the DSPORB_ System_setPriority() interfaces. The GPP/ DSP channel I/ O driver allows multiple threads to operate in parallel.

The QoS Manager is the part of iDSPOrb on the DSP-side that (1) instantiates algorithms as needed by the client , (2) updates constraints from the client application and manages resources to satisfy constraints (or reports back that constraints cannot be met), and (3) more.

### 2d. iDSPORB registration service

iDSPOrb provides a class registration service so server objects can register their services. For example, a server object can register with iDSPOrb to decode MP3 audio. Client objects instantiate server objects by supplying the name of the desired service. The iDSPOrb Registration Service can be used for any kind of DSP object services but it is media domain aware by providing a standard set of monikers for audio and video services:

| Audio Services Video Services | |
|---|---|
| MP3 Audio Decode MPEG1 Video Decode | |
| MP3 Audio Encode MPEG1 Video Encode | |
| MPEG1 L2 Audio Decode MPEG2 Video Decode | |
| MPEG1 L2 Audio Encode MPEG2 Video Encode | |
| G. | 723 Decode MPEG4 Video Decode |
| G. | 723 Encode MPEG4 Video Encode |
| G. | 729 Decode H. 263 Decode |
| G. | 729 Encode H. 263 Encode |
| ... | ... |

The iDSPOrb Registration Service allows iDSPOrb to dynamically instantiate server objects at runtime. When instantiating a server object, iDSPOrb dynamically assigns low level I/ O channels between the microprocessor and the DSP. These low level channels can be accessed directly by the client object via the iDSPOrb streaming interface (see DSPORB_ Stream Interface ). The iDSPOrb Registration Service also provides information allowing iDSPOrb to locate a DSP providing a particular service, and it allows the QoS Manager to do load balancing and scheduling projections (see Real-Time QoS Manager). For example, using the dynamic invocation model, the call DSPORB_ ALG_ create ("MP3 Audio Decode", NULL) will instantiate an instance of an MP3 audio decoder. iDSPOrb load balances the system and the client is shielded from the details of which DSP is actually executing the decoder, and what low level streams were allocated to pass data. A client can also enumerate the list of currently registered server classes by querying iDSPOrb. The function DSPORB_ Alg* DSPORB_System_getServices() can be used to get an enumerator of the services currently registered. Then char *DSPORB_System_next( DSPORB_Alg *enum) can be called to get the name of each registered service. The enumeration can be reset to the beginning by calling DSPORB_System_reset( DSPORB_ Handle *enum).

### 2e. Media framework support.

iDSPOrb can be used to support media processing acceleration by providing components for particular media frameworks such as
DirectShow (Windows Media): Filter objects can be implemented to wrap iDSPOrb codec client objects and plugged into the DirectShow framework.

RealMedia Architecture (RealSystem G2): Renderer plugins can be implemented to wrap iDSPOrb codec client objects and plugged into the RealSystem G2 framework.

DSPOrb can also plug into JMF and QuickTime using the same methodology.

The API for iDSPOrb is encapsulated in the DSPORB module. The datatypes and functions of the client (GPP)-side DSPORB are specified below.

### 2f. Data types:

DSPORB_Alg : a client proxy for a DSP algorithm object.
DSPORB_Fxn : a function object to be used with dynamic invovation.
DSPORB_Arg : a function argument object to be used with dynamic invocation. DSPORB_Buffer and DSPORB_ Stream are 'subclasses'
of DSPORB_Arg.
DSPORB_Params : provides the parameters for an algorithm that matches the IALG_ Params algorithm parameters structure on the DSP-side.
DSPORB_Buffer : a buffer object.
DSPORB_Stream : a stream object.

### 2g. DSPORB_Buffer interface

- DSPORB_Buffer* DSPORB_Buffer_create( int size, int direction);
   Creates a buffer object that can reference data of length size . direction is one of DSPBUFFER_INPUT or DSPBUFFER_OUTPUT . Buffer directions must match the function invocation signature or a iDSPOrb runtime error will occur.
   Alternatively, DSPORB_Buffer* DSPORB_Buffer_create(DSP ORB_Alg*, int,int); a buffer that is utilized by an object.
- unsigned char* DSPORB_Buffer_getData();
   Gets the data referenced by the buffer object. If the buffer is connected to another buffer, then NULL is returned.
- void DSPORB_Buffer_setData( unsigned char* data)
   Sets the buffer data pointer. If this buffer is connected to another buffer, then this operation fails, since the memory space for the data of this buffer is in the DSP memory space.
- void DSPORB_Buffer_setSize( int)
   Sets the size of actual data.
- int DSPORB_Buffer_getSize()
   Gets the size of actual data.
- void DSPORB_Buffer_delete( DSPORB_Buffer* buffer)
- int DSPORB_Buffer_connect( DSPORB_ Buffer* output, DSPORB_Buffer* input)
   Connects an input buffer to an output buffer on the DSP. When these buffer objects are connected, the data remains on the DSP and is not transferred back to GPP (a buffer is created by iDSPOrb on the DSP to hold the intermediate result).

### 2h. DSPORB_Stream interface

The stream interface has the following methods.
- DSPORB_Stream* DSPORB_Stream_create( int n, int direction); creates a stream that can hold n buffers. direction is one of DSPSTREAM_INPUT or DSPSTREAM_OUTPUT.
- int DSPORB_Stream_issue( DSPORB_Buffer* buf);has an input buffer buf sent on an input stream, or an empty buffer put on the queue to be filled on an output stream. For streams that are connected, this operation has no effect, since the streams will be directly connected between algorithms.
- DSPORB_Buffer* DSPORB_Stream_reclaim(); gets an output buffer from an output stream; or a input buffer that can be resent on an input stream. For streams that are connected, this operation has no effect.
- DSPORB_Stream_select( DSPORB_Stream array[], int n_streams, int* mask, long millis); blocks until a stream is ready for I/ O.
- DSPORB_Stream_idle( DSPORB_Stream* str); idles a stream.
- DSPORB_Stream_close( DSPORB_Stream* str); closes a stream.
- DSPORB_Stream_connect( DSPORB_Stream* out, DSPORB_Stream* in); connects an output stream to an input stream. The two stream halves now operate in the DSP processor space and are not accessible to the GPP.

### 2i. DSPORB dynamic invocation interface

The dynamic invocation interface has the following methods.
- int DSPORB_System_init(); must be called first to initialize DSPOrb.
- DSPORB_Alg* DSPORB_ Alg_ create( const char* name, DSPORB_Params* params); creates an instance of the algorithm referenced by the symbol 'name'.
- void DSPORB_Alg_delete( DSPORB_ Handle alg); deletes the algorithm instance.
- DSPORB_Fxn* DSPORB_Alg_getFxn( DSPORB_ Alg* alg, const char* fxn_name); returns the function object associated with the symbol 'fxn_name'.
- int DSPORB_Fxn_setTimeConstraint( DSPORB_Fxn* fxn); sets a time boundary for the execution of fxn . DSPOrb will allocate sufficient resources to satisfy this constraint, or return 0.
- int DSPORB_Fxn_setPriority( DSPORB_Fxn* fxn); sets a priority level from 1 to 15.
- int DSPORB_Fxn_invoke( DSPORB_Fxn* fxn, DSPORB_Arg* args[]); invokes a function on inputs and outputs. This invocation blocks until all data available on unconnected outputs. For inputs and outputs that are connected with 'DSPORB_Buffer_connect', 'NULL' can be passed.
- int DSPORB_Fxn_invokeAsync( DSPORB_Fxn* fxn, DSPORB_Arg* args[]); invokes a function on inputs and outputs. This invocation returns immediately; the application retrieves data from output argument objects using 'DSPORB_getData'.
- unsigned char* DSPORB_Arg_getData( DSPORB_Arg* output, long timeout); gets data from an output argument object. Blocks until 'timeout' in nanoseconds has occurred; or indefinitely if 'timeout = -1'.
- void DSPORB_Arg_setCallback( DSPORB_Arg* output, unsigned char* (* getData) ( DSPORB_ Arg*)); sets a callback function on an output argument; getData is called when data is available.
- void DSPORB_System_close() closes the DSPOrb.

### 2j. An example of the iDSPOrb

The first example shows how iDSPOrb is used to connect to the TI H.263 decoder on the C6xxx, using the dynamic invocation interface. The second example shows the same program written with the proxy stubs. 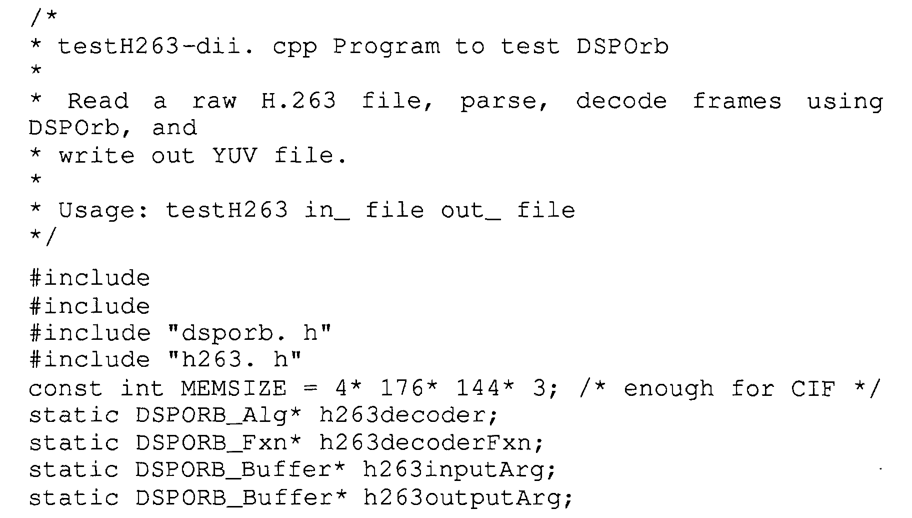 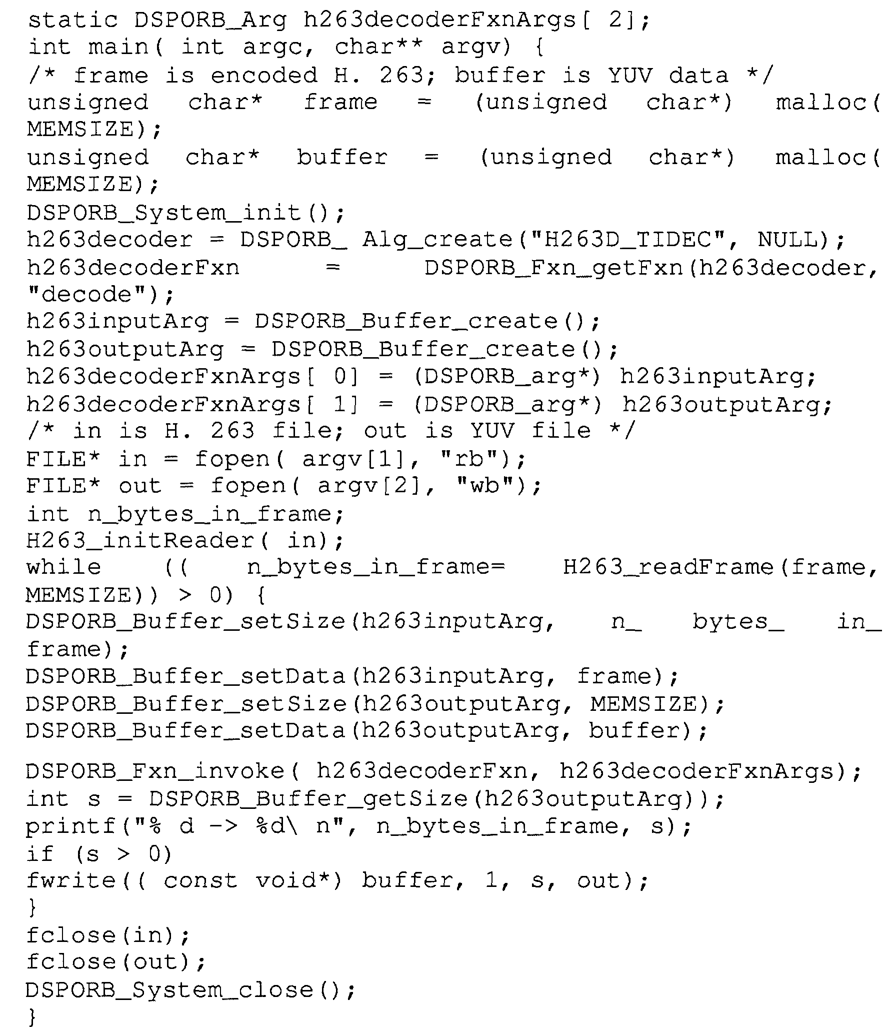 Now the stubs version:

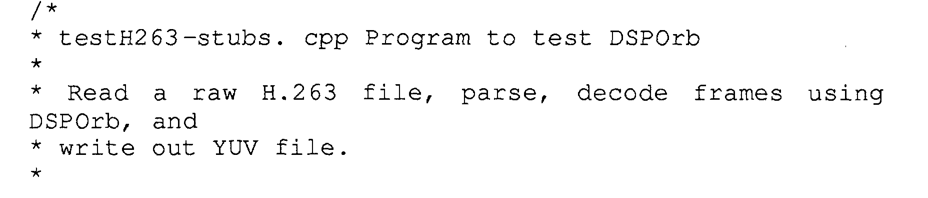

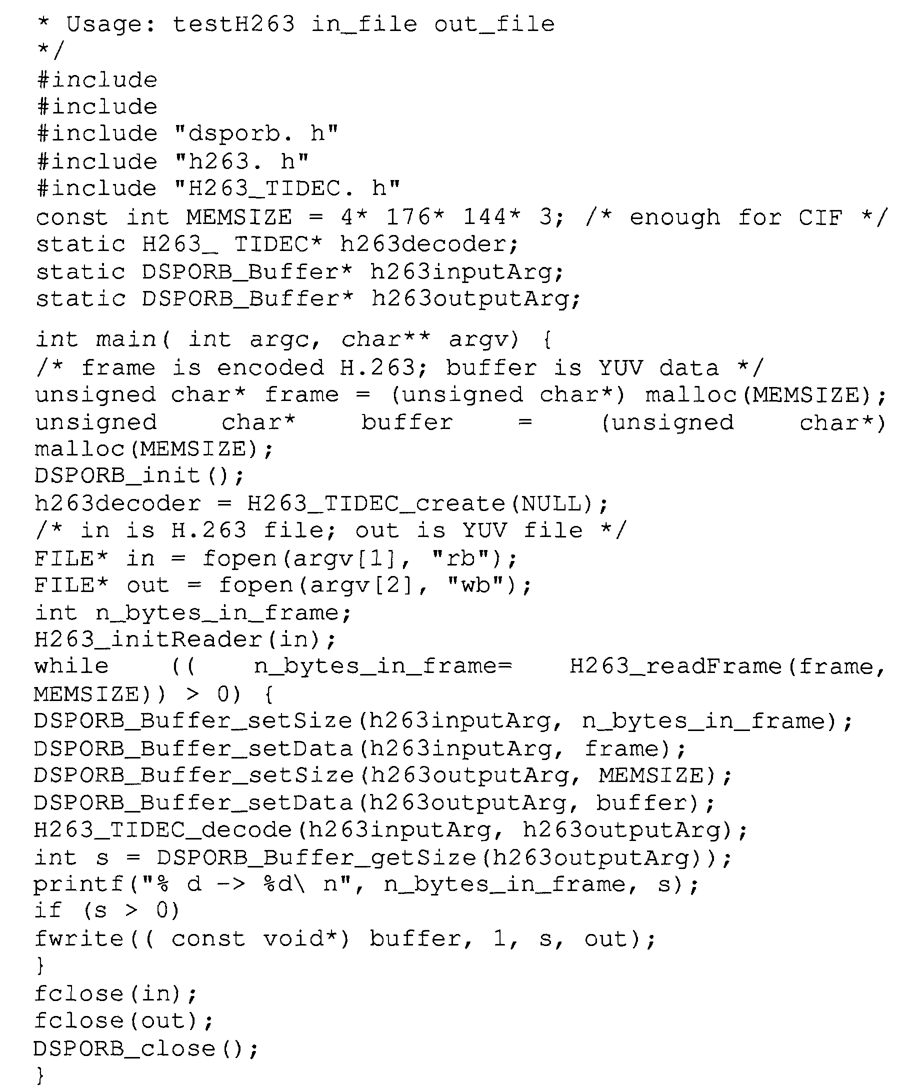

### 3. Quality of service (QoS)

A preferred embodiment configuration in which the iDSPOrb Quality of Service Manager (iDSP-QoSM) is defined consists of a host processor with a pool of Digital Signal Processors (DSPs) as peer servers. An umbrella QoS-manager that performs all functions necessary for maintaining a specific quality of service manages this pool of DSP servers. The host processor is frequently a general-purpose processor (GPP), which is connected to the DSPs through a hardware interface such as shared memory or a bus type interface. The QoS manager may be part of a iDSPOrb or, more generally, a separate manager on the DSPs. The system is driven both by hardware and software interrupts. The a preferred implementation is to let the main user (client) application run on the GPP and specific services run on the DSPs on a load-sharing basis. Running concurrently with the QoS manager, on all processors, may be a framework such as the iDSP Media Framework. The iDSP-QoS manager performs three main functions: (1) classification of objects, (2) scheduling of objects, and (3) prediction of execution times of objects.

These functions will be described below, in a GPP/multi-DSP environment, using a media specific example.

### 3a. Classification of objects

In a media specific environment, the object translates to a media codec/filter (algorithm). Media objects can be classified based on their stream type, application type or algorithm type. Depending on the type of the algorithm the QoS managers defines metrics known as Codec-cycles, Filter-Cycles etc.

### 3b. Scheduling of objects (Hard-deadlines)

The iDSP-QoSM schedules the algorithm objects based on a two-phase scheduler. The first phase is a high-level scheduler that determines if a new media stream is schedulable on the DSP and sets hard-real time deadlines for Codec-cycles. The second phase schedules individual media frames and makes use of the hard real-time deadlines from the first phase. The first phase runs at object negotiation time and typically on the host (GPP). The second phase would run on the DSPs (servers) and runs on a per frame basis.

The first phase of scheduling is when the QoS manager determines on average if the object can be supported with already concurrently running objects. Also required as part of the first phase scheduling is consideration of sufficient support for the object in terms of memory. The object memory buffers for internal usage, input and output, must be fixed statically at the time of its instantiation to remove the uncertainty of allocating memory dynamically. The iDSP Media platform only runs XDAIS compliant algorithms. The developers are required to define the processing times under different conditions for their algorithms. The approximate times required for data transport to and from the servers are determined at the time of initialization which is factored in by the QoS manager when it sets deadlines for each object.

Each DSP object is required to supply the following information to the QoS Manager:
n Codec-cycle and Number of Frames (Default: frames/second)
T_{acc} Average time to compute a Codec-cycle in number of target server (DSP)cycles.
T_{acd} Display time of a Codec-cycle in number of target server (DSP) cycles.

For a video codec, n will usually be the number of frames between successive I-Frames (e.g. 15 frames). And T_{acc} will usually be the sum of the maximum amount of time required for an I-Frame plus the average time required for the P and B frames. The QoS Manager keeps track of the T_{ccd} for all media objects. This time (in terms of DSP cycles) is based on the current frame rate. For example, for a 30 fps video stream and n = 15, let T_{ccd}=125 Mcycles.

The QoS Manager can now determine if a new stream is schedulable as follows. Let S be the sum of the Codec-cycles (T_{acc}) for all streams currently scheduled. If (S + T_{acc}) for the new stream is less than the T_{ccd} for the new stream, the stream is schedulable, otherwise it is not. For example, assume there is an Object-A with n = 15, T_{axc}= 39.5 Mcycles (158 ms), and T_{ccd} = 125 Mcycles (500 ms), and there are no tasks scheduled on the DSP (so S = 0). The QoS Manager is notified to schedule resources for a new stream that requires Object-A. Because S + 39.5 = 39.5 Mcycles < 125 Mcycles (500 ms), we can schedule the stream. When a second stream comes along requiring Object-A, it is also scheduled because S + 39.5 = 79 Mcycles (316 ms) < 125 Mcycles (500 ms). A third stream can also be scheduled. A fourth stream, however, can not be scheduled because that requires 158 Mcycles (632 ms), so we can not meet the 500 ms hard deadline. At this point the QoS Manager negotiates to reduce the frame rate of a stream and, failing that, will reject the stream altogether.

A modification allows the scheduler to handle heterogeneous media objects with differing Codec-cycle times. Objects with longer T_{ccd} are prorated to the smallest T_{ccd}. For example, assume there is an Object-B with n = 30, T_{axc} = 40 Mcycles (160 ms), and T_{ccd} = 169 Mcycles (675 ms), and there are two Object-A objects (as defined above) scheduled on the DSP (so S = 79 Mcycles /316 ms). We can schedule the new Object-B stream because S + 40 * (125/158) = 110.45 Mcycles (S + 160* 500/675 = 435 ms). This is provably correct since (79+40 < 125) Mcycles / (316 + 160 < 500)ms, so we can actually guarantee all the streams within the shorter Codec-cycle deadline of 500 ms. What happens when a second stream requiring Object-B needs scheduling? 110.45 + 40*125/158 = 139 > 125 M cycles / 435 + 160*(500/675) = 554 ms > 500 ms. Therefore, the scheduler rejects this stream and begins negotiating as mentioned above.

The iDSP-QoSM will negotiate with the application or its proxy to reserve sufficient processing bandwidth for a media object based on the Codec-cycle. This negotiation will take into account an object's required memory, requested QoS level and available MIPS of the DSP with other running concurrent DSP applications. As the object selection changes, the QoS manager will perform a renegotiation of DSP processor bandwidth. Input parameters to the negotiation process of the QoS manager require the application to define the following for an object:
(1) DSP memory requirements (Number and size of input/output buffers)
(2) Desired QoS level (typically expressed in Frames per second)
(3) Worst case runtime for starting the object.
(4) Has hard real-time deadlines for sequences of media frames, called Codec-cycles (number of frames and average execution time).

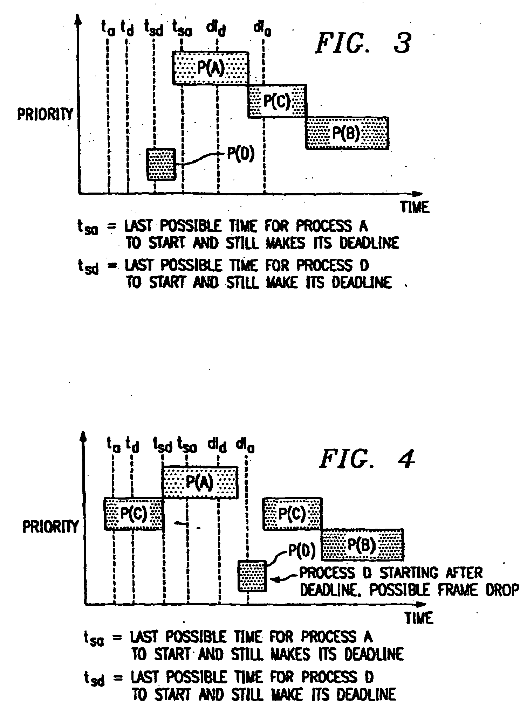

The second phase scheduling of objects in the iDSP-QoS manager is based on two aspects, whose deadline comes first as and who has the higher priority. Consider the following example, if Object-A has a deadline at 10ms and Object-D has a deadline at 3ms the iDSP QoS manager will schedule Object-D to run first even though Object-A is of a higher priority. Since we know the approximate runtimes of the objects we can determine the "No Later" time when an object must be started so that it still meets its deadline. In Figure 3 it is predicted that Object-D will finish before the "No Later" start point for Object-A. In this scenario there is not a deadline conflict between the higher priority Object-A and Object-D. Therefore Object-A runs after the lower priority Object-D.

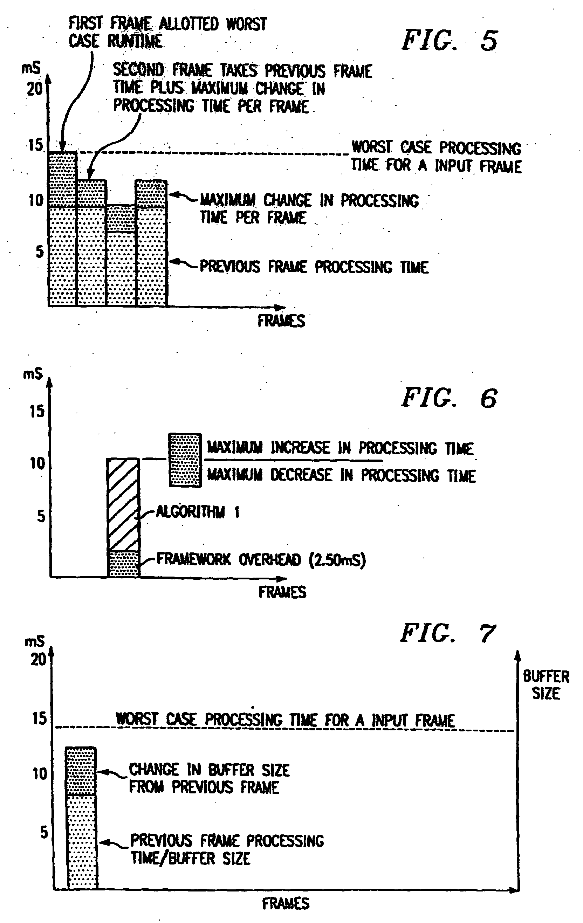

In another scheduling example where priority would weigh in over first deadline is if the "No Later" time of the higher priority Object-A is before the predicted finish-time of Object-D predicted. In this case Object-A would run first since it is higher priority and Object-D would be allowed to run after, further only if Object-D meets its frame dropping parameters specified at object instantiation time; see Figure 4.

For the iDSP QoS to manage the deadlines to the best possible efficiency, the GPP must let the data input frames to the DSP subsystem as soon as possible to allow the maximum amount of time between arrival time and deadline for an object. The greater the time for a data frame between its arrival and its deadline allows the iDSP-QoSM more flexibility in the scheduling of the respective objects with other concurrent objects.

### 3c. Runtime Prediction of Objects (Soft-deadlines)

The central function of the iDSP-QoSM is to predict the required processing times for the next input frames of all scheduled objects. This prediction is non-trivial and unique to an object. The QoS manager predicts the runtime for an object by using the statistics of previous run times to calculate the expected run time for the next input frame. The expected runtime for an object is a function (unique to an object) of previous runtimes with a maximum possible positive change (also determined uniquely for each object). For instance, in the case of video objects, the periodicity of I, P and B frames are deterministic. Hence, future processing times can be predicted based on the type of present frame and its location within the periodicity of the video frames. Such predictions performed on all concurrent alogrithms directly helps in dynamically re-allocating priorities based on the predicted processing times and approaching hard deadlines.

These predictions are the key enablers for managing soft-deadlines and jitters in processing times. The iDSP-QoSM, based on the predictions, will instantaneously reschedule the objects for processing. This instantaneous rescheduling occurs within the Codec-cycle deadline times (hard-deadlines defined on an average) of individual objects. This method is unique in the sense that individual frames are weighted according to both hard and soft deadlines. In the example above we assumed that all frames in Object-B required the same amount of time when we averaged the workload for the 500ms overlap with Object-A. This may not be true as the frames for Object-B may require more time during the actual overlap or Object-B may not be given the average amount of time. Therefore, frames closest to their Codec-cycle deadline receive a higher priority.

If the predicted runtime violates the user-defined time requirements the QoS manager will take one of several possible actions.
In a Single DSP configuration:
(level 1) A simple binary cut off: This results in an automatic frame-drop. The object in question should be capable of indicating if frame drops will cause catastrophic results.
(level 2) A general reduction in allotted runtime of lower priority objects with a pre-emption of the object at the end of the allocated time. This may or may not result in a frame-drop.
(level 3) Objects are required to have the ability to accept QoS commands such as scaling back quality of the output data.
In a Multiple DSP configuration:
(1) At the end of each QoS time-slice, messages with load-data are sent from each DSP to the GPP.
(2) The GPP resorts to a redistribution of objects ONLY in the case of an estimated dead-line miss. This re-allocation of tasks is to be performed by the GPP (ORB layer) after receiving the "load-data" from the serving DSPs. However, to reduce task switching time, it is VERY DESIRABLE that all DSPs operate from a common cluster of external memory space.

All objects executing in the iDSP system have to be deterministic in execution times. DSP objects can be broken down into three types, compressing of data (encoding), decompressing of data (decoding) and data conversion (pre or post processing of data for objects). The objects are presented data in blocks to process; these blocks are called input data frames. The objects process an input data frame and generate an output data frame. As with any computational data, both input and output data frames are bounded in terms of size and the amount of processing. Based on the size of any given input frame there can be a precise determination of the maximum amount of processing that a DSP, or any other computer for that matter, will have to perform on that input frame.

Each object, before it is integrated into the iDSP system, is required to declare the worst case run time for that object for a single frame. This worst case run time is used to calculate the run time of the first input data frame so the object can be started. The QoS manager is not able to characterize the input data frame before the object is run. Since encoder and decoder objects rarely run in worst case scenarios the first input frame will be costly (since it has to be predicted to be worst case). This worst case schedule is likely to cause a greater than actual runtime for the first frame. This is only a problem if the actual runtime is greater than the worst case schedule.

As stated earlier, the processing time of an algorithm object will vary between input frames. At the outset, the iDSP-QoSM will start with the worst case value for the first data input frame. After the first frame, the QoS manager will predict the processing time for the next input frame based on the characteristics of the algorithm and the measured processing time for the first frame. For each subsequent frame, it predicts an approximate processing time, based on the semantics and the history of the algorithm object. For example, encoder objects use the object semantics (e.g., I, P, and B frame types) along with the average encoding time of the previous similar input frames for predicting future encoding time requirements. Encoder objects work on the same size input frame each time they are scheduled for execution. The variations in processing times come from factors like the activity level in the frame, degrees of motion between frames etc. These variations, however are bounded. Hence, the processing time between two frames will have a finite maximum difference which can be added to the predicted processing time to determine the worst case processing time for the next frame. See Figures 5-6.

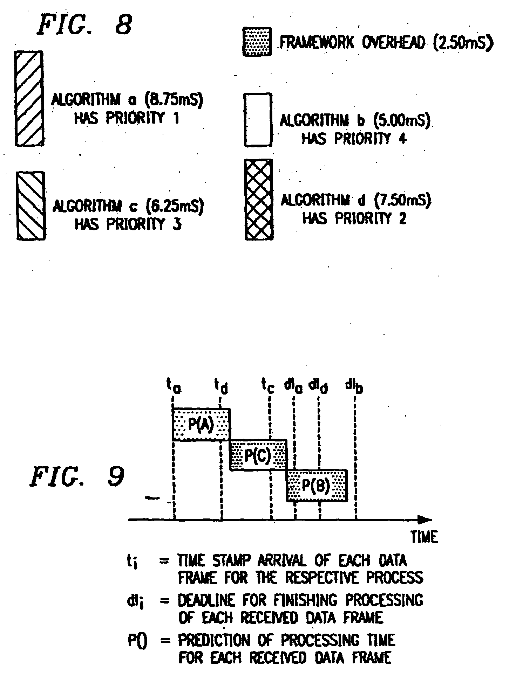

Decoding objects are typically presented variable sized input frames. The processing time of an input data frame is directly proportional to its size. To determine if there will be an increase in the next frame processing time, the QoS manager will check the magnitude of difference in the present and the next data input frame sizes. A similar argument, as with the encoder, also holds for the decoder i.e, the difference in the processing between two semantically similar frames is bounded. The maximum or worst case processing time for a decoder is the largest possible buffer that is defined for the object. See Figure 7.

Conversion objects run similar to encoder objects in that they always work on the same size input frames. Each frame always takes the same amount of processing time and is a single pass through the input frame. Therefore the processing time per input frame will always remain constant.

Each object will receive from the user application a relative time in which the passed frame must be completed by the object. An example would be that the application specifies that this frame must be processed in the next 7mS. Since there is no common software clock between the host GPP and the DSP deadlines can only be specified in relative terms. We assume transport time of data frames between the host and the DSP to be deterministic. The iDSP system keeps an internal clock against which the data frame receives a timestamp upon arrival and then calculates the expected processing time. After computing the expected processing time the QoS manager now schedules the data frame execution.

Before an object can be scheduled, the QoS manager determines the appropriate order of execution of the object compared against other concurrent objects. If there are no other objects processing input frames, the object frame is immediately scheduled for execution. If there are other objects running, the QoS manager determines execution order by considering the priority, expected deadlines and hard or soft real time requirements of each requested object. See Figure 8.

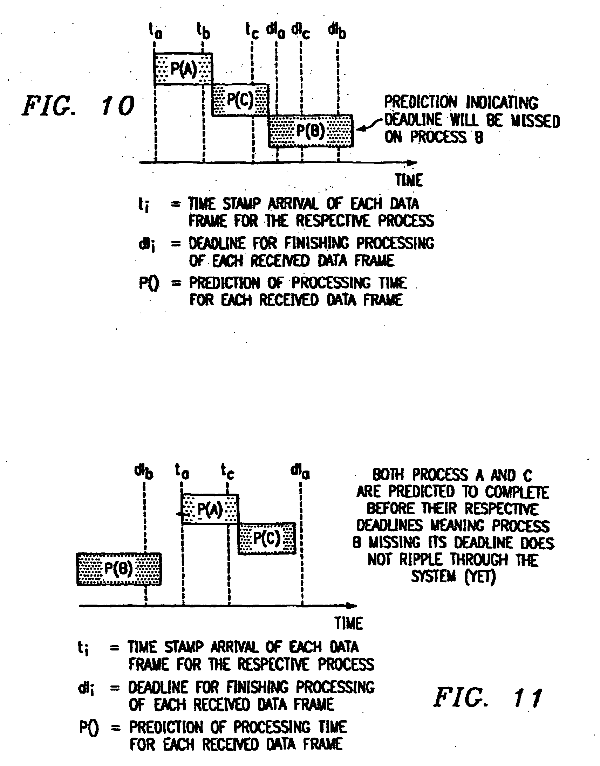

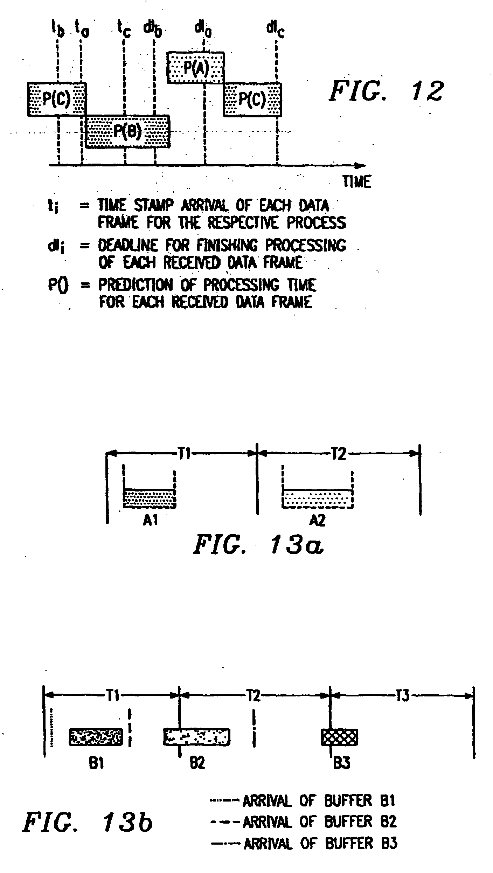

When multiple objects, with different runtime priorities, are combined onto the same DSP, the QoS manager will compute a runtime prediction for each object based on the object's specific runtime calculation. It then schedules different tasks based on a scheduling object (TBD). The following three scheduling scenarios are possible:
(1) All the objects run to completion on the input data frames given and complete within the application-specified deadline. This scenario is presented in Figure 9, notice that all the objects in the picture complete before each object deadline. If all objects complete before their respective deadlines, work required of the QoS manager is minimal.
(2) The processing load increases on one or more objects (ex: Object-B), but, this does not cause the prediction deadlines for following objects to be missed. It is possible for the load to increase on one or more objects such as in Object-B. Depending on the object, missing a deadline may be acceptable if subsequent data frames of the same object are processed within their deadline restriction. An example would be in a H263 encoder where an "I" frame takes the longest to compute. The frame following the "I" frame is always a "P" frame and typically has a lot smaller processing requirements. This allows the "I" frame processing to cycle steal from the following P frame processing. Thus, missing the deadline on one frame may not be catastrophic if there is sufficient processing room on the next frame.
   Since the deadline for Object-B has been exceeded, the overall system effect has to be determined. If the missing of deadline by Object-B does not cause the prediction deadlines for following objects to be missed then the overall system hazard is minimal. See Figures 10-11.
(3) The processing load increases on one or more objects (Ex: Object-B), but, this CAUSES the prediction deadlines for following objects to be missed. See Figure 12.

In this case, the missing of deadline by Object-B causes the prediction deadlines for following objects to be missed. Even in this case, the overall system hazard may or may not be minimal. Each of the concurrently running objects might be able to steal cycles from subsequent frames and hence avoid a domino-effect of missed deadlines.

The iDSP-QoSM proposes a set of rules for soft-deadline management. This set of rules is designed to limit a snow-balling effect of missed deadlines resulting from a single critical missed deadline. (1) Every algorithm object provides the QoS manager a maximum number of frame-drops/second allowed. (2) Each object updates a running count of the number of 'missed deadlines' as a moving average after each processing cycle. (3) When an object exceeds its limit of missed deadlines, change the priority of the object to the highest value. Original priority is restored once the number drops below the limit. (4) All subsequent frames that miss their deadline after the limit, are dropped. This results in a temporary lowering of the QoS to the next immediate level. This instantaneous drop in QoS (should be extremely rare) is then reported to the client. (5) Frames are dropped as a rule, ONLY if the DSP has not even started the object in question even after the passage of its deadline.

### 3d. Throttle control for periodic media rendering

For a given algorithm object, the iDSP-QoSM assumes that there is only one request in the ready queue at any instant. Media streams, in general, have periodic deadlines (e.g., 30 frames/sec for video streams) specified as quality of service constraints to the QoS manager. Audio and video rendering components in a media system can buffer frames to handle variances in arrival times, allowing frames to arrive slightly ahead of schedule. But these buffers are finite and so the upstream components of a media system must carefully throttle the relative speeds at which frames are processed.

Two mechanisms are provided by the iDSP-QoSM for throttling the processing speeds of algorithm objects.
(1) The client of the DSP algorithm object controls the speed at which it invokes the processing function (server) of the algorithm object. This can result in sub-optimal behavior of the QoS manager's scheduling algorithm if the requests are made within the time period they must be fulfilled. For example, consider algorithm object A above in which buffer A1 must be processed within time period T1 and buffer A2 must be processed within time period T2. Fig. where T1 and T2 are two successive periods, [x] indicates arrival of buffer x, {x} indicates completion of processing of buffer x. See Figure 13a.
(2) The QoS Manager controls the throttling of the media stream. This mechanism allows the client to invoke an algorithm object's processing function, with an input buffer, as soon as possible. The QoS manager will then append a 'start-deadline' to the input buffer. The scheduler does NOT schedule this buffer until after the 'start deadline'. The client blocks until the processing of its present buffer is completed. See Figure 13b.
   Thus, in both cases, there is at most one request per algorithm object, in the QoS manager ready queue at any instant.

### 4. Memory paging

To best run multiple algorithms on a DSP, or any processor for that matter, a set of rules must be established so that system resources are shared fairly among the algorithms. These rules specify access to peripherals of the processor such as DMA, internal memory, and scheduling methods for the algorithms. Once a set of rules has been accepted, a system interface can be developed for the algorithms to plug into so that they can access system resources. A common system interface provides the algorithm developer well-defined bounds in which to develop algorithms sooner because they can concentrate solely on the algorithm development and not system support issues. An example of such an interface is the Texas Instruments iDSP Media Platform DSP framework. All access between an algorithm and a TMS320C62XX DSP occur through this framework.

The Texas Instruments XDAIS standard requirement establishes rules that allow the plug-ability of more than one algorithm into the iDSP Media Platform allows system integrators to quickly assemble production quality systems from one or more algorithms. The XDAIS standard requires that the algorithm meet a common interface requirement called the Alg interface. There are several rules imposed by the XDAIS standard, most significant is that the algorithm cannot directly define memory or directly access hardware peripherals. System services are provided through the single common interface for all algorithms. Therefore the systems integrator only provides a DSP framework that supports the Alg interface to all the algorithms. The Alg interface also provides to the algorithm developers a means of accessing system services and invocation for their algorithm.

An algorithm must exactly define its internal memory requirements. This is a necessity for a paging architecture to support multi-algorithms accessing the same space in internal memory. XDAIS compliant Algorithms are required to specify their internal and external memory requirements.

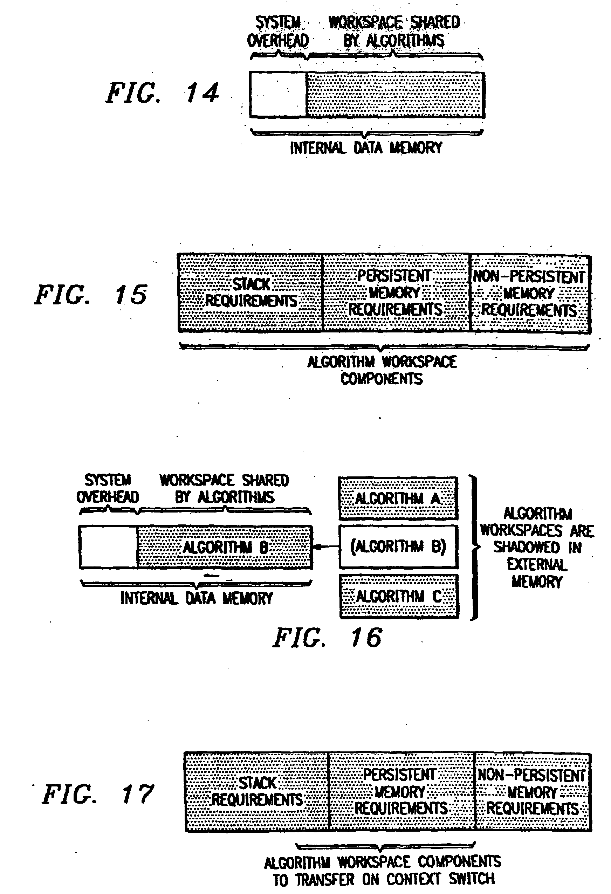

The internal (on-chip) memory has to be divided up into two areas. First is the System overhead area, this is support for the OS data structures for a particular DSP system configuration. The second area is for the algorithms to use but only when they have been scheduled to execute. Both memory areas have to be fixed in size. This second area of memory is called the algorithm on-chip workspace; in other terms this workspace area can also be described as a data overlay or data memory page. See Figure 14.

To determine how much memory is available for the algorithm on-chip workspace, the system developer takes the total amount of internal data memory space available and subtracts out the amount needed to support system software such as the OS support and data support for the paging architecture. The OS configuration, such as tasks, semaphores, and so forth, should be set by the system DSP designer to a maximum size that supports the total number of algorithms the designer wants to have running concurrently at one time. This keeps OS support overhead to a minimum and increases the algorithm workspace.

For an algorithm to run in this environment its internal memory requirements must be less than the size of the workspace. Otherwise the system integrator cannot integrate the algorithm; the limitation is that there is only one page per algorithm. This architecture does not support multiple pages for an algorithm.

The algorithm workspace is divided into three components, Stack (mandatory), Persistent Memory and Non-Persistent memory. There is sometimes a fourth component that will be discussed later dealing with read only portions of persistent memory. See Figure 15.

An algorithm only uses the on-chip workspace while it is executing. When an algorithm is scheduled to execute the DSP system software will transfer the algorithm's workspace from its external storage location (shadow storage) into the internal workspace on-chip. When the algorithm yields control, the DSP system software will determine which algorithm to run next, if it is the same algorithm then there is no need to transfer in the workspace. If the next algorithm is a different algorithm then the current workspace is stored in its shadow location in external memory and the next algorithm's workspace is transferred in. See Figure 16.

The entire workspace for an algorithm is not transferred at context switch time. Only the used portion of the stack and persistent data memory are transferred. The algorithm's stack is at its highest level (least used) when an algorithm is at its highest level in its call stack. In other words the algorithm is at its entry point.

The ideal context switch for an algorithm happens when its stack is at its highest level because that means there is less data to transfer off-chip into shadow storage. See Figure17.

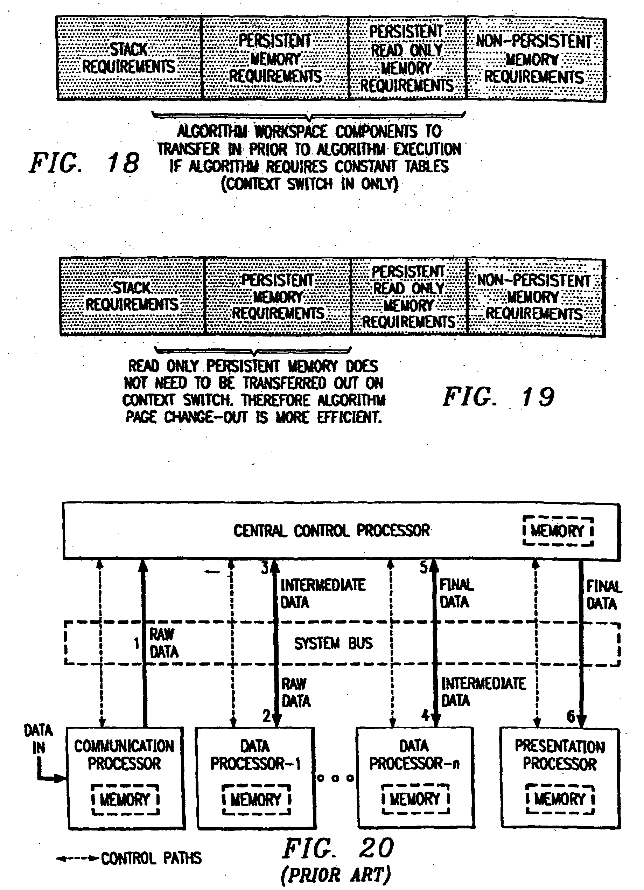

The preferred embodiment data page architectures require the context switch to be most efficient. Context switch processing overhead takes away from the time the DSP can execute algorithms. Since the best time to context switch an algorithm is on its call boundary, the pre-empting of algorithms should be absolutely minimized. Pre-empting an algorithm when its stack is greater than its minimum will de-grade the overall system. This should be a requirement, but it might acceptable to pre-empt on a very limited basis. See Figures 18-19.

A special case of the algorithm workspace is if the algorithm requires a read only persistent memory. This type of memory is used for look-up tables used by the algorithm. Since this memory is never modified then it only needs to be read in and not written. This asymmetric page transfer decreases the overhead with the context switch of the algorithm.

With this data paging architecture a single algorithm can be instantiated more than once. Since the algorithm has defined what its needs for internal memory requirements, the DSP system integrator can more than one instance of the same algorithm. The DSP system software keeps track of the multiple instances and the when to schedule each instance of an algorithm. The limit of number of instances is how much external memory there is in the DSP system to maintain the shadow version of the algorithm instance.

The DSP system software has to manage each instance so that it is correctly matched to the algorithm data upon scheduling the algorithm. Since most DSP algorithms are instantiated as tasks, the DSP system software could use the task environment pointer as a means to manage the algorithm instances.

### 5. Data flow with chaining

The data flow preferred embodiments rely on integrating processing elements, providing them a shared memory space, and routing data directly between processing elements without intervention by the GPP. Such a system is shown in Figure 21.

When processing element PEₐ completes processing a chunk of data it writes the resulting data to a pre-defined output buffer in shared memory. PEₐ then notifies the next processing element, PE_{b} in the chain via the appropriate control path. The notification indicates which shared memory buffer PE_{b} should use as input. PE_{b} then reads the data from the input buffer for further processing. In this manner data is passed between all processing elements required until all data has been consumed.

A set of buffers, as described above, is used to communicate data between two processing elements and comprises an I/O channel between those elements. Multiple I/O channels may exist between any two processing elements allowing multiple data streams to be processed simultaneously (i.e. in parallel) by the system. Figure 22 shows and example of parallel processing of multiple data streams, s1 and s2.

A series of processing elements connected by I/O channels constitutes a channel chain. Several channel chains can be defined within a particular system. In the case of a mid-chain processing element each input channel has an associated output channel. Terminal processing elements have only input or output channels.

A processing element's input channel defines the buffer(s) from which data is to be read. A processing element's output channel defines the buffer(s) to which data is to be written as well as which processing element to notify afterwards.
Types of control messages between the data processing elements and the central control processor (CCP) are.
(1) status messages: data stream processing started, stopped, aborted, paused, resumed, etc...
(2) quality of service messages: time stamps, system load, resources free/busy, etc...
(3) data stream control messages: start, stop, pause, resume, rewind, etc...
(4) system load messages: tasks running, number of active channels, channels per processing element, etc...

In one preferred embodiment, the creation and association of I/O channels with processing elements is defined statically via a configuration file which can be read at system initialization time. For each bitstream type to be processed, the configuration file defines a channel chain (i.e. data path) connecting the appropriate processing elements. The collective processing of all processing elements in a channel chain results in complete consumption of the data.

In the case where multiple data paths exist for a given bitstream, alternate or backup channel chains could be defined. Bitstreams could be routed to these in case of unavailability of any processing element of a primary channel chain. Determination of the bitstream type at runtime and dynamic QoS analysis selects the channel chain through which the data is routed. At runtime all legal channel chains in the system are fixed and unmodifiable.

In another preferred embodiment, channel chains for different bitstreams could be constructed dynamically when a new bitstream arrives at the communication processor. Bitstream information derived at runtime would be sent via control message(s) to the CCP which would determine the processing elements required and dynamically allocate I/O channels between them. This approach would allow resources to be taken out of service or brought online at runtime allowing the system to adapt automatically.

In the shared memory heterogeneous system, data flows between the processing elements via the external shared memory without intervention by the CCP. Data never appears on the bus so the speed of a data transaction is determined by shared memory access time rather than bus transport time. Since CCP intervention is also minimized, CCP response and processing delays are eliminated from the overall data flow time. This enhances the throughput of the system by minimizing data transfer time between processing elements.

### 5a. An example

A typical application of the data flow techniques discussed herein would be for media processing systems. Such a system would initiate and control streams of broadband media for processing such as decoding, encoding, translating, converting, scaling, etc.. It would be able to process media streams originating from local disk or from a remote machine/server via communication mediums such as cable modem, DSL, or wireless. Figure 23 shows an example of such a system.

The media processing system of Figure 23 contains five processing elements:
(1) DSL or Cable Modem I/O front-end DSP
(2) media processing DSP
(3) video/graphics overlay processor
(4) H.263 decoder task
(5) color space converter task

The H.263 stream entering the front-end I/O DSP follows a channel chain defined by numbered arcs 1 through 3. Each channel connects 2 processing elements and is composed of a set of I/O buffers used to pass data between the elements. Control flow is shown via the shaded arcs.

The H.263 stream flows from the I/O front-end DSP into a channel 1 I/O buffer defined in global shared memory. The I/O front-end DSP notifies the destination processing element associated with channel 1, i.e. the H.263 decoder task on the media processing DSP, that its input buffer is full and ready to be read. The H.263 decoder task reads from the channel 1 I/O buffer, decodes the data and writes the resulting YUV data to the channel 2 I/O buffer in local shared memory.

Note that channels can be inter-processor or intra-processor. Data can pass between processors via global shared memory (inter-processor) or via shared memory "local" to a given processor (intra-processor). In Figure 4, channels 1 and 3 are inter-processor and channel 2 is intra-processor.

## Claims

1. A client-server scheduling method comprising:
(a) a first phase of scheduling on a client to set real-time deadlines for tasks for a server coupled to said client; and
(b) a second phase of scheduling on said server of subtasks of said tasks, said second phase of scheduling using the real-time deadlines of step (a).

2. The scheduling method of claim 1, wherein:
(a) said tasks include a media stream decoding; and
(b) said subtasks include a frame decoding for frames of said media stream.

3. An object request broker method for a client-server system comprising:
(a) collapsing a first client request return and a second client request call; and
(b) chaining an output of a first server object to an input of a second server object where said first server object and said second server object correspond to first and second client requests, respectively.

4. The method of claim 3, wherein:
(a) said chaining is by creation of a buffer for intermediate results (output of said first object and input for said second object) in said server.

5. A method of server processor memory management in a client-server system comprising:
(a) allocating a first portion of a processor memory to processor overhead; and
(b) allocating a second portion of said processor memory to task workspace wherein said second portion can be occupied by only a single task at a time.

6. The method of claim 5, wherein:
(a) said second portion of memory includes a stack component, a persistent memory component, and a non-persistent memory component.

7. A method of data flow in a heterogeneous system with a bus connected to a control processor and to each of a plurality of processing elements, which method comprising:
(a) transferring data among said processing elements by use of a common memory separate from said bus.
